# EUROPEAN PATENT APPLICATION

(11) **EP 3 151 452 A1**
(43) Date of publication of application: **05.04.2017**
(21) Application number: 15290253.2
(22) Date of filing: 30.09.2015
(51) Int. Cl.: H04J 3/06

(54) **NETWORK NODE OF A TELECOMMUNICATIONS NETWORK**

(71) Applicant: ALCATEL LUCENT, 92100 Boulogne-Billancourt (FR)
(72) Inventor: Koch, Werner, 70435 Stuttgart (DE)
(74) Representative: DREISS Patentanwälte PartG mbB

(57) **Abstract**

It is proposed a network node (2) of a telecommunications network, the network node (2) comprising a time adjustment unit (4) for time synchronization between network nodes (2) of the telecommunications network. The time adjustment unit (4) is configured to generate an egress time synchronization signal (6). A switch network (8) is configured to feed back the egress time synchronization signal (6) across a signal path (10) of the network node (2. A counter unit (12) is configured to determine a signal delay (14) occurring on the signal path (10). The time adjustment unit (4) is configured to determine a timestamp (16) in dependence of the signal delay (14).

## Description

### Field of the invention

The invention relates to a network node of a telecommunications network and a method to operate the network node.

### Background

Long term evolution, LTE, was developed by 3GPP to cope with the increasing demand for better Quality of Service, QoS, and the emergence of bandwidth consuming multimedia applications. However, the LTE radio interface comprises a time-division multiplex access scheme, which implies coordination of the baseband units attending the user equipments.

The precision time protocol according to IEEE 1588 is used to synchronize clocks and respective phases in a communications network. The LTE backhaul network comprises telecom boundary clocks and telecom time slave clocks which have to fulfil a maximum constant/static time error, cTE, of 20 or 50 ns according to ITU-T G.8273.2 / Y.1368.2.

### Summary

In view of the prior art, it is an object of the present disclosure to improve accuracy between clocks in a telecommunications network.

Therefore it is proposed a network node of a telecommunications network and a method to operate the network node. The network node comprises a time adjustment unit for time synchronization between network nodes of the telecommunications network. The time adjustment unit is configured to generate an egress time synchronization signal. A switch network is configured to feed back the egress time synchronization signal across a signal path of the network node. A counter unit is configured to determine a signal delay occurring on the signal path. The time adjustment unit is configured to determine a timestamp in dependence of the signal delay. Advantageously the signal path may comprise for example interface chips with a fluctuating accuracy with respect to an induced delay. This delay may depend on temperature, age, operational parameters, etc. The determination of this delay advantageously reduces further costs regarding sensors or further circuitry by simultaneously increasing accuracy of network distributed clocks. Therefore even a phase-alignment accuracy of 20 ns can be reached. Moreover, even RS422 interface chips of different manufacturers may be used in the signal path and/or replaced without affecting the accuracy of the phase-alignment. The RS422 interface chips provide electrostatic discharge protection and/or galvanic isolation. As a result a network node and a method to operate the network node are provided with accurate precision time protocol, PTP, ingress and/or egress interfaces.

In an advantageous embodiment the switch network and the counter unit are adapted to determine a first signal delay on an ingress signal path and a second signal delay on an egress signal path.

In an advantageous embodiment the signal path is an egress signal path for transmitting the egress time synchronization signal from the time adjustment unit to a first egress interface. An uncompensated timestamp is generated. The time adjustment unit is configured to determine an egress timestamp in dependence on the signal delay and in dependence on the generated uncompensated timestamp. The egress timestamp is transmitted to a further network node via a second egress interface.

In an advantageous embodiment the signal path is an ingress signal path for transmitting an ingress time synchronization signal from a first ingress interface to the time adjustment unit. An uncompensated timestamp is received via a second ingress interface. The time adjustment unit is configured to determine an ingress timestamp in dependence on the signal delay and in dependence on the uncompensated timestamp.

In an advantageous embodiment the counter unit is started at a first point in time when receiving the egress time synchronization signal at an egress section. The counter unit is stopped at a second point in time when receiving the egress time synchronization signal at the ingress section wherein the signal delay is the difference between the first point in time and the second point in time.

In an advantageous embodiment in a first mode the switch network connects the egress signal path to an ingress section. The counter unit determines the signal delay on the egress signal path.

In an advantageous embodiment in a second mode the switch network connects the ingress signal path to an ingress section and connects the egress section to the ingress signal path. The counter unit determines the signal delay on the ingress signal path

In an advantageous embodiment in a third mode the switch network connects the first ingress interface to the ingress section and/or connects the egress section to the first egress interface.

In an advantageous embodiment the ingress path and/or the egress path comprises a RS422 interface unit.

In an advantageous embodiment the network unit comprises a telecom boundary clock.

In an advantageous embodiment the network unit comprises a telecom time slave clock.

### Brief description of the figures

- Figures 1, 3, 5 and 7: show a schematic block diagram of a network node of a telecommunications network, respectively;
- Figure 2: shows schematically the telecommunications network;
- Figure 4: shows a schematic state diagram; and
- Figure 6 and 8: show a schematic flow diagram for operating the network node, respectively.

### Description of the embodiments

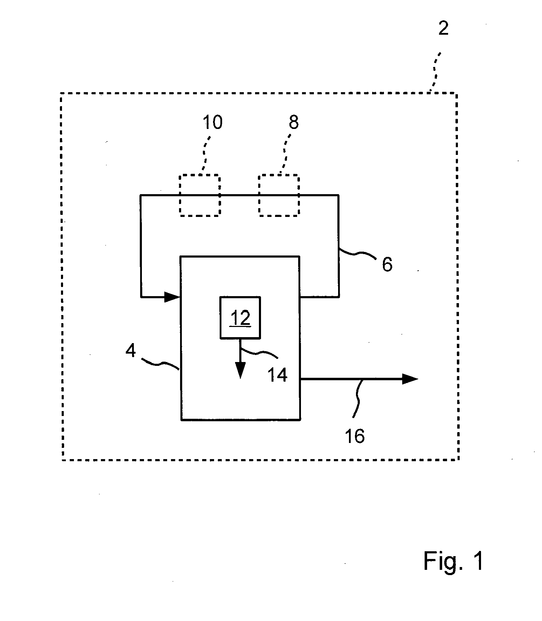

Figure 1 shows a schematic block diagram of a network node 2 of a telecommunications network. The network node comprises a time adjustment unit 4 for time synchronization between network nodes of the telecommunications network. The time adjustment unit 4 is configured to generate an egress time synchronization signal 6. A switch network 8 is configured to feed back the egress time synchronization signal 6 across a signal path 10 of the network node 2. A counter unit 12 is configured to determine a signal delay 14 occurring on the signal path 10. The time adjustment unit 4 is configured to determine a timestamp 16 in dependence of the signal delay 14. The network node 2 works according to the precision time protocol and comprises a respective master part and/or a respective slave part.

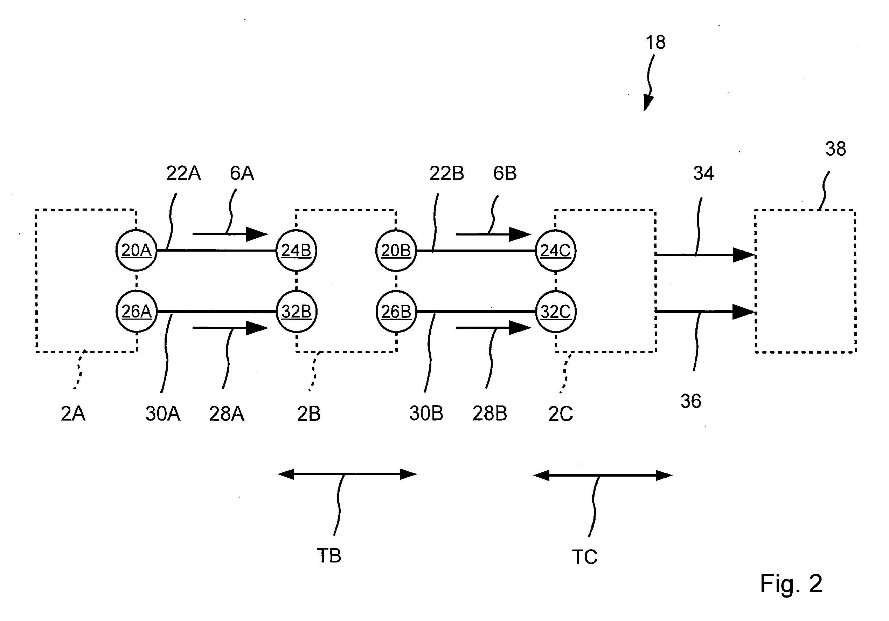

Figure 2 shows schematically a telecommunications network 18 with a first network node 2A comprising a telecom boundary clock, a second network node 2B comprising a telecom boundary clock, and a third network node 2C comprising a telecom boundary clock. Of course further second network nodes 2B can be arranged between the network nodes 2A and 2B. The precision time protocol according to IEEE 1588 is used to synchronize the clocks in the communications network 18. A maximum constant time error across the respective network node 2B, 2C shown in figure 2 of 20 or 50 ns according to ITU-T G.8273.2 / Y.1368.2 is provided.

The network node 2A has a first egress interface 20A to transmit the egress time synchronization signal 6A over a transmission line 22A. The network node 2B has a first ingress interface 24.B to receive the egress time synchronization signal 6A as an ingress time synchronization signal. The network node 2A has a second egress interface 26A to transmit an egress timestamp 28A over a transmission line 30A. The network node 2B has a second ingress interface 32B to receive the egress timestamp 28A as an ingress timestamp.

The network node 2B has a first egress interface 20B to transmit the egress time synchronization signal 6B over a transmission line 22B. The network node 2C has a first ingress interface 24C to receive the egress time synchronization signal 6B as an ingress time synchronization signal. The network node 2B has a second egress interface 26B to transmit an egress timestamp 28B over a transmission line 30B. The network node 2C has a second ingress interface 32C to receive the egress timestamp 28B as an ingress timestamp.

The network node 2C sends data 34 and a timestamp 36 to an end application unit 38 which may comprise a baseband unit BBU and remote radio heads RRHs to operate a radio communications network. The radio communications network may operate according to a time-division multiplex scheme which will benefit from an accurate timestamp 36. The accurate timestamp enables coordination between a plurality of end application units 38 to operate a radio communications network.

The network nodes 2A, 2B and 2C are interconnected to perform a uni-directional transport of the respective signals. The network nodes 2A, 2B, 2C and the end application unit 38 may be part of a baseband unit. The transmission lines between the nodes 2 may be of different lengths therefore introducing a different delay on each transmission line.

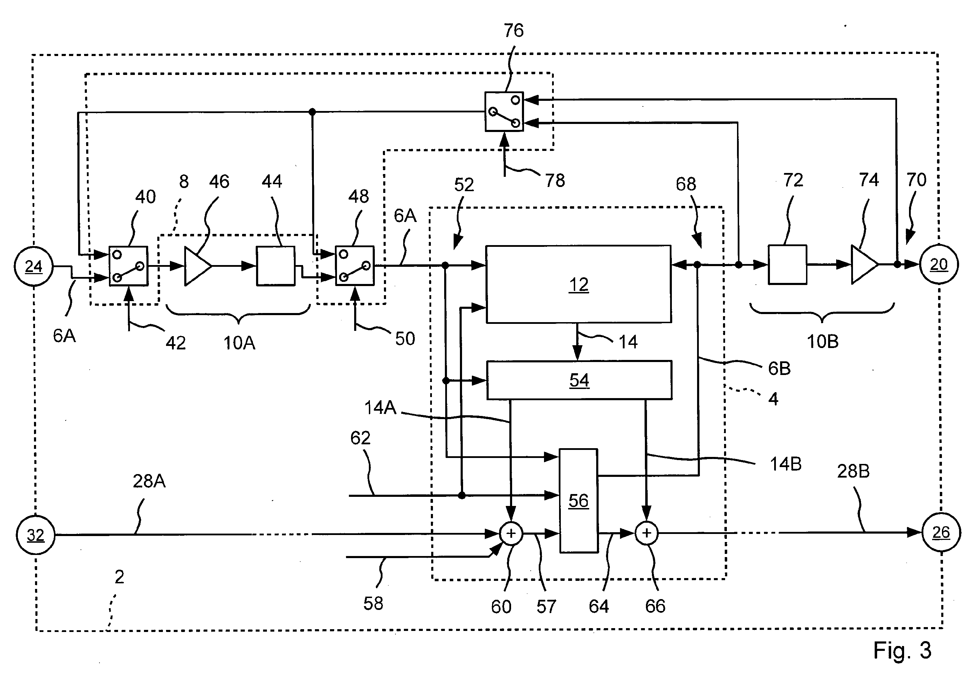

Figure 3 shows a schematic block diagram of the network node 2. Departing from the ingress interface 24 the ingress time synchronisation signal 6a is applied to a first switch 40. The first switch 40 is operated by a signal 42. In the shown mode of the first switch 40 the signal 6a is applied to an ingress signal path 10A for transmitting the ingress time synchronization signal 6a from the first ingress interface 24 towards the time adjustment unit 4. The ingress signal path 10A comprises a level translator 44 and a RS422 interface unit 46. The output of the ingress signal path 10A is applied to a second switch 48, which is operated by a signal 50. According to the shown mode of the switches 40 and 48, the ingress time synchronization signal 6a is applied to an ingress section 52 of the time adjustment unit 4.

The time adjustment unit 4 comprises the counter unit 12, a control unit 54 and a clock unit 56. The counter unit 12 is not used in the third mode described in connection with figure 2. The clock unit 56 receives an ingress timestamp 57 and synchronizes its clock to the ingress timestamp when receiving the ingress time synchronization signal 6a. An uncompensated timestamp 28A is received via the second ingress interface 32 and applied to an addition unit 60. A fixed delay 58 is determined previous to operation of the network node 2 by the network operator and represents the delay introduced by the transmission line 22A connected to the ingress interface 24. Moreover, the signal delay 14A representing the delay introduced by the ingress signal path 10A is applied to the addition unit 60. Therefore the ingress timestamp 57 is the sum of the uncompensated timestamp 28A, the signal delay 14A and the delay 58. Furthermore, a phase-locked loop working clock signal 62 is applied to the clock unit 56. Therefore the slave part of the network unit 2 provides that the clock of the clock unit 56 is aligned to a master part of a corresponding network unit connected to the ingress interfaces 24, 32. In an embodiment the network node may only comprise the slave part of the network node 2 described here.

The clock unit 56 generates the egress time synchronization signal 6B and a corresponding uncompensated timestamp 64. The timestamp 64 and an egress delay 14B are applied to an addition unit 66. The egress timestamp 28B is the sum of the timestamp 64 and the egress delay 14B and is applied to the second egress interface 32. The egress time synchronization signal 6B passes through an egress section 68 of the time adjustment unit 4, an egress signal path 10B, and an egress section 70 of the egress signal path 10B and is applied to the first egress interface 20. The egress signal path 10B comprises a level translator 72 and a RS422 interface unit 74.

A third switch 76 is operated by a signal 78. To minimize the load on the transmission line 22B connected to the first egress interface 20, the third switch 76 connects the egress section 68 with the open terminals of the switches 40 and 48. The switches 40, 48 and 76 form the switch network 8 and may be embodied in form of electronic switches like MOSFETs or in for form of mechanical switches like a relay switch.

For example the clock unit 56 operates according to the precision time protocol, wherein the ingress timestamp 57 is a time-of-day message and the ingress time synchronization signal 6A is a pulse-per-second signal, PPS. The control unit 54 can be embodied by a microcontroller. The control unit 54 provides a first delay 14A and the second delay 14B. The timestamps 57 and 28B are determined phase-aligned in dependence on the delays 14A and 14B.

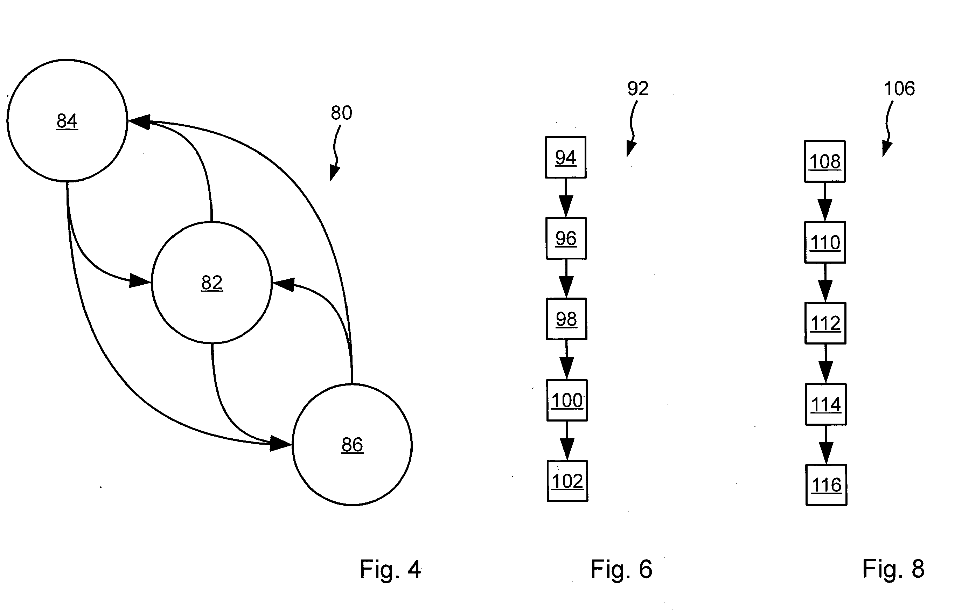

Figure 4 shows a schematic state diagram 80 with the third mode 82, a first mode 84, and a second mode 86. It is possible to switch from each mode to a further mode. In the first mode 84 the current delay 14 of the egress signal path 10B is determined by the counter unit 12, and the delay 14B is updated by the controller 54. In the second mode 86 the current delay 14 of the ingress signal path 10A is determined by the counter unit 12, and the delay 14A is updated by the controller 54. In the first and second mode 84, 86 the clock unit 56 is disconnected from the signal 6A, which is not a problem as there is hardly any phase-drift for these small time intervals.

In an embodiment the first mode 84 or the second mode 86 are activated within a fixed time interval, ea. each 10 seconds. In a further embodiment the first mode 84 or the second mode 86 are activated within a time interval, wherein a mean value is determined in dependence of the current delay 14, for example the respective delays 14A, 14B, and the time interval is increased if the difference between the mean value and the current delay 14 falls below a threshold. In an embodiment the first mode 84 or the second mode 86 are activated if the temperature of the network unit or a first supply voltage of the level translator 44 and/or the RS422 interface unit 46, or a second supply voltage of the level translator 72 and/or the RS422 interface unit 74 passes a threshold value. Moreover, the third mode is only activated if both delays 14A and 14B are in a stable state, wherein for example the delays 14A and 14B are inside a band around a respective mean value.

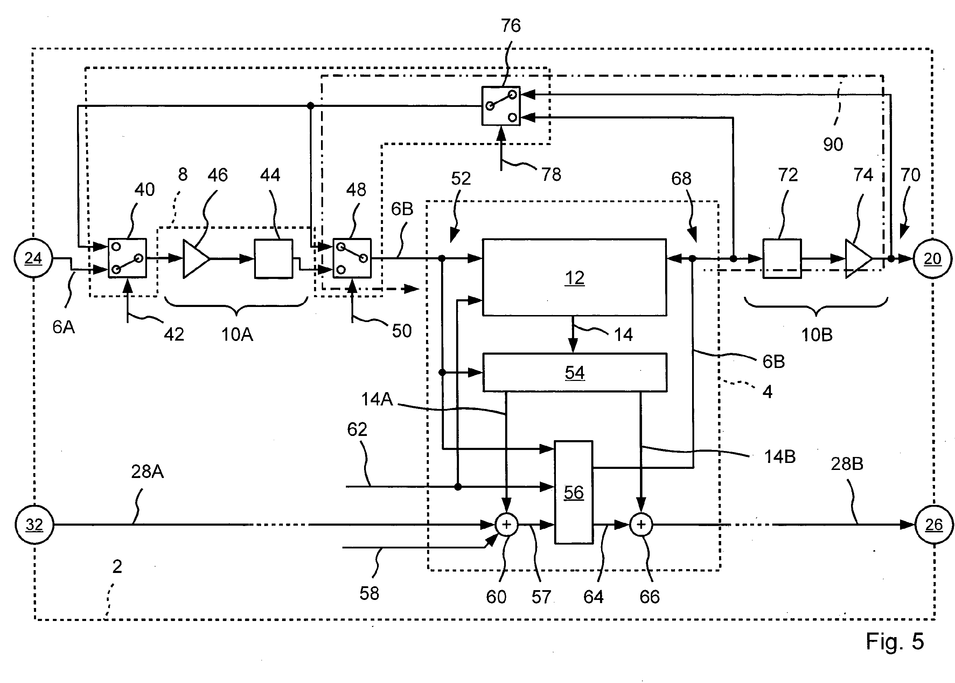

Figure 5 shows the network node 2 of figure 3 in the first mode 84. In the first mode 84 the switch network 8 connects the egress path 10B, namely the egress section 70 to the ingress section 52 according to a schematic path 90. Consequently the egress time synchronization signal 6B is fed back to the ingress section 52 across the egress path 10B. In the first mode 84 the ingress time synchronization signal 6A is disconnected. The counter unit 12 determines the current delay 14 on the egress path 10B and updates the delay 14B.

Figure 6 shows a schematic flow diagram 92 for operating the network node 2 in the first mode 84. In a step 94 the switch network 8 is operated to establish the schematic path 90. In step 96 the counter unit 12 is started when determining an edge of the egress time synchronization signal 6B. In step 98 the edge of the egress time synchronization signal 6B reaches the input side of the counter unit 12 on the ingress section 52 and stops the counter unit 12. Also the controller unit 54 registers in step 100 the edge of the signal 6B on the ingress section 52, reads the current delay 14 and updates the delay 14B in dependence on the current delay 14. In step 102 the network node 2 returns to the third mode 82.

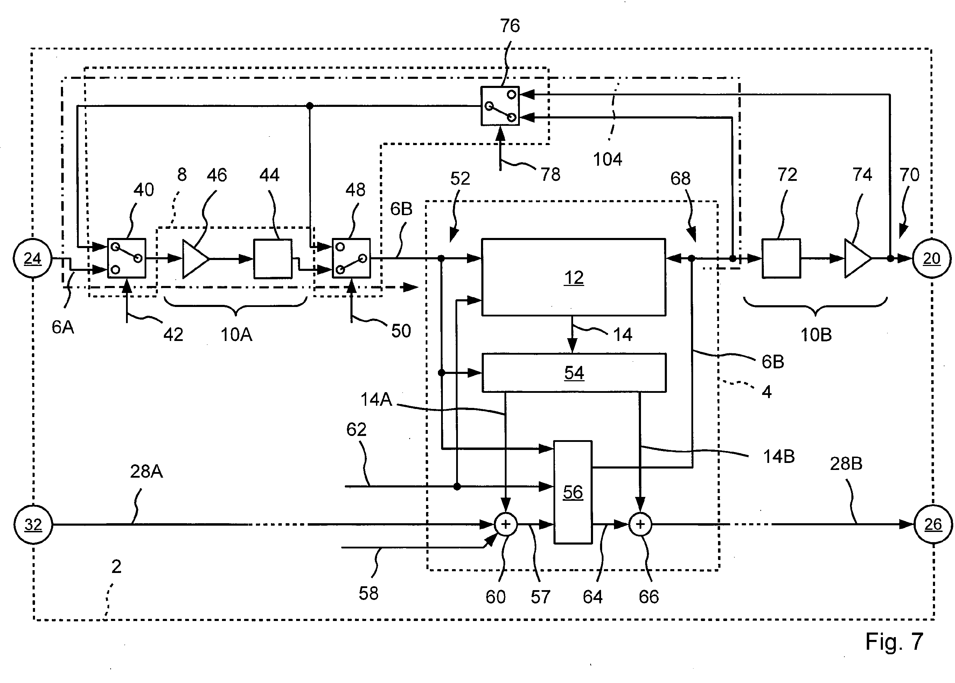

Figure 7 shows the network node 2 of figure 3 in the second mode 86. In the second mode 86 the switch network 8 connects the egress section 68 to the ingress path 10A and connects the ingress path 10A to the ingress section 52 according to a schematic path 104. Consequently the egress time synchronization signal 6B is fed back to the ingress section 52 across the ingress path 10A. In the second mode 86 the ingress time synchronization signal 6A is disconnected. The counter unit 12 determines the current delay 14 on the ingress path 10A and updates the delay 14A.

Figure 8 shows a schematic flow diagram 106 for operating the network node 2 in the second mode 86. In a step 108 the switch network 8 is operated to establish the schematic path 104. In step 110 the counter unit 12 is started when determining an edge of the egress time synchronization signal 6B. In step 112 the edge of the egress time synchronization signal 6B reaches the input side of the counter unit 12 on the ingress section 52 and stops the counter unit 12. Also the controller unit 54 registers in step 114 the edge of the signal 6B on the ingress section 52, reads the current delay 14 and updates the delay 14A in dependence on the current delay 14. In step 116 the network node 2 returns to the third mode 82.

## Claims

1. A network node (2) of a telecommunications network, the network node (2) comprising a time adjustment unit (4) for time synchronization between network nodes (2) of the telecommunications network, wherein
- the time adjustment unit (4) is configured to generate an egress time synchronization signal (6);
- a switch network (8) is configured to feed back the egress time synchronization signal (6) across a signal path (10) of the network node (2);
- a counter unit (12) is configured to determine a signal delay (14) occurring on the signal path (10);
- the time adjustment unit (4) is configured to determine a timestamp (16; 57; 28B) in dependence of the signal delay (14).

2. The network node (2) according to claim 1, wherein the switch network (8) and the counter unit (12) are adapted to
- determine a first signal delay (14A) across an ingress signal path (10A) and to
- determine a second signal delay (14B) across an egress signal path (10B).

3. The network node (2) according to claim 1 or 2,
wherein the signal path (10B) is an egress signal path for transmitting the egress time synchronization signal (6B) from the time adjustment unit (4) to a first egress interface (20),
wherein an uncompensated timestamp (64) is generated, wherein the time adjustment unit (4) is configured to determine an egress timestamp (28B) in dependence on the signal delay (14B) and in dependence on the generated uncompensated timestamp (64), and
wherein the egress timestamp (28B) is transmitted to a further network node (2) via a second egress interface (32).

4. The network unit (2) according to any one of the preceding claims,
wherein the signal path (10A) is an ingress signal path for transmitting an ingress time synchronization signal (6A) from a first ingress interface (24) to the time adjustment unit (4),
wherein an uncompensated timestamp (28A) is received via a second ingress interface (32), and
wherein the time adjustment unit (4) is configured to determine an ingress timestamp (57) in dependence on the signal delay (14A) and in dependence on the uncompensated timestamp (28A).

5. The network unit (2) according to any one of the preceding claims, wherein the counter unit (12) is started at a first point in time when receiving the egress time synchronization signal (6B) at an egress section (68), wherein the counter unit (12) is stopped at a second point in time when receiving the egress time synchronization signal (6B) at the ingress section (52), wherein the signal delay (14) is the difference between the first point in time and the second point in time.

6. The network unit (2) according to any one of the preceding claims, wherein in a first mode (84) the switch network (8) connects the egress signal path (10B) to an ingress section (52), and wherein the counter unit (12) determines the signal delay (14) on the egress signal path (10B).

7. The network unit (2) according to any one of the preceding claims, wherein in a second mode (86) the switch network (8) connects the ingress signal path (10A) to an ingress section (52) and connects the egress section (68) to the ingress signal path (10A), and wherein the counter unit (12) determines the signal delay (14) on the ingress signal path (10A).

8. The network unit (2) according to any one of the preceding claims, wherein in a third mode (82) the switch network (8) connects the first ingress interface (28) to the ingress section (52) and/or connects the egress section (68) to the first egress interface (20).

9. The network unit (2) according to any one of the preceding claims, wherein the ingress path (10A) and/or the egress path (10B) comprises a RS422 interface unit.

10. The network unit (2B) according to any one of the preceding claims, wherein the network unit (2B) comprises a telecom boundary clock.

11. A method to operate a network node (2) of a telecommunications network, the network node (2) comprising a time adjustment unit (4) for time synchronization between network nodes (2) of the telecommunications network, the method comprising:
- generating an egress time synchronization signal (6B) by means of the time adjustment unit (4);
- feeding back the egress time synchronization signal (6B) across a signal path (10) of the network node by means of a switch network (8);
- determining a signal delay (14) occurring on the signal path (10) inside the network node (2) by means of a counter unit (12);
- determining a timestamp (16; 57; 28B) by means of the time adjustment unit (4) in dependence of the signal delay (14).

12. The method according to the preceding claim, wherein the method is executable on a network node (2) according to any one of the claims 1 to 10.

## Amended claims

### Amended claims in accordance with Rule 137(2) EPC.

1. A network node (2) of a telecommunications network, the network node (2) comprising a time adjustment unit (4) for time synchronization between network nodes (2) of the telecommunications network, wherein
- the time adjustment unit (4) is configured to generate an egress time synchronization signal (6);
- a switch network (8) is configured to feed back the egress time synchronization signal (6) across a signal path (10) of the network node (2) to an ingress section (52) of the time adjustment unit (4);
- a counter unit (12) is configured to determine a signal delay (14) occurring on the signal path (10);
- the time adjustment unit (4) is configured to determine a timestamp (16; 57; 28B) in dependence of the signal delay (14).

2. The network node (2) according to claim 1, wherein the switch network (8) and the counter unit (12) are adapted to
- determine a first signal delay (14A) across an ingress signal path (10A) and to
- determine a second signal delay (14B) across an egress signal path (10B).

3. The network node (2) according to claim 1 or 2, wherein the signal path (10B) is an egress signal path for transmitting the egress time synchronization signal (6B) from the time adjustment unit (4) to a first egress interface (20),
wherein a timestamp (64) is generated,
wherein the time adjustment unit (4) is configured to determine an egress timestamp (28B) in dependence on the signal delay (14B) and in dependence on the generated timestamp (64), and
wherein the egress timestamp (28B) is transmitted to a further network node (2) via a second egress interface (32).

4. The network node (2) according to any one of the preceding claims,
wherein the signal path (10A) is an ingress signal path for transmitting an ingress time synchronization signal (6A) from a first ingress interface (24) to the time adjustment unit (4),
wherein a timestamp (28A) is received via a second ingress interface (32), and
wherein the time adjustment unit (4) is configured to determine an ingress timestamp (57) in dependence on the signal delay (14A) and in dependence on the received timestamp (28A).

5. The network node (2) according to any one of the preceding claims, wherein the counter unit (12) is started at a first point in time when receiving the egress time synchronization signal (6B) at an egress section (68), wherein the counter unit (12) is stopped at a second point in time when receiving the egress time synchronization signal (6B) at the ingress section (52), wherein the signal delay (14) is the difference between the first point in time and the second point in time.

6. The network node (2) according to any one of the preceding claims, wherein in a first mode (84) the switch network (8) connects the egress signal path (10B) to the ingress section (52), and wherein the counter unit (12) determines the signal delay (14) on the egress signal path (10B).

7. The network node (2) according to any one of the preceding claims, wherein in a second mode (86) the switch network (8) connects the ingress signal path (10A) to the ingress section (52) and connects the egress section (68) to the ingress signal path (10A), and wherein the counter unit (12) determines the signal delay (14) on the ingress signal path (10A).

8. The network node (2) according to any one of the preceding claims, wherein in a third mode (82) the switch network (8) connects the first ingress interface (28) to the ingress section (52) and/or connects the egress section (68) to the first egress interface (20).

9. The network node (2) according to any one of the preceding claims, wherein the ingress path (10A) and/or the egress path (10B) comprises a RS422 interface unit.

10. The network node (2B) according to any one of the preceding claims, wherein the network unit (2B) comprises a telecom boundary clock.

11. A method to operate a network node (2) of a telecommunications network, the network node (2) comprising a time adjustment unit (4) for time synchronization between network nodes (2) of the telecommunications network, the method comprising:
- generating an egress time synchronization signal (6B) by means of the time adjustment unit (4);
- feeding back the egress time synchronization signal (6B) across a signal path (10) of the network node (2) to an ingress section (52) of the time adjustment unit (4) by means of a switch network (8);
- determining a signal delay (14) occurring on the signal path (10) inside the network node (2) by means of a counter unit (12);
- determining a timestamp (16; 57; 28B) by means of the time adjustment unit (4) in dependence of the signal delay (14).
